# EUROPEAN PATENT SPECIFICATION

(11) **EP 3 039 492 B1**
(45) Date of publication and mention of the grant of the patent: **13.09.2017**
(21) Application number: 14786528.1
(22) Date of filing: 26.08.2014
(51) Int. Cl.: G04D 3/08

(54) **ENERGY STORAGE AND RELEASE DEVICE USING ELASTIC RESERVOIRS, AND METHODS AND TIMEPIECES RELATED THERETO**
ENERGIESPEICHERUNG UND LÖSEVORRICHTUNG VERWENDUNG VON ELASTISCHEN STAUSEEN UND METHODEN UND UHREN IM ZUSAMMENHANG DARAUF
DISPOSITIF DE LIBÉRATION ET DE STOCKAGE D'ÉNERGIE UTILISANT DES RÉSERVOIRS ÉLASTIQUES, AINSI QUE PROCÉDÉS ET APPAREILS HORAIRES ASSOCIÉS

(30) Priority: 26.08.2013 US 201361959643 P; 28.08.2013 US 201361870803 P
(43) Date of publication of application: 06.07.2016
(73) Proprietor: Preciflex SA, 2502 Biel/Bienne (CH)
(72) Inventor: ROHNER, Johann, CH-1400 Yverdon-les-Bains (CH)
(74) Representative: Mötteli-Mantelli, Novella
(86) International application number: PCT/IB2014/001624
(87) International publication number: WO 2015/028870

(56) References cited:
- WO-A1-2013/084057
- WO-A2-2006/065976
- FR-A- 388 272
- FR-A- 1 358 777
- GB-A- 892 558
- US-A- 598 066
- US-A- 3 863 453

## Description

### Background of the Invention

This invention relates to time keeping devices, comprising energy storage and release systems and in particular systems which use a liquid medium to transmit force, and methods and timepieces related thereto. Prior art storage and release systems include watch mainsprings for example. What is needed is a storage and release system that serves the purpose of a conventional system but does so in an unconventional and novel manner.

Document FR 1 358 777 discloses an horology movement actuated by an hydraulic system.

### Summary of the Invention

An energy storage and release system includes two elastic bellows in fluid communication with one another and filled with a fluid or fluids (whether liquids alone or in combination with a gas) thus allowing mechanical power transmission. The energy which loads the system comes from an external winding up of the system (which can be performed either manually or automatically). The winding or loading force is transmitted by a mechanism attached to one or the other fluid reservoirs. As the system is loaded, the fluid contained therein expands and contracts the fluid reservoirs. The fluid reservoirs are elastic. Consequently, once a reservoir is expanded or contracted, then when the energy input from the mentioned manual or automatic winding is removed or ceases, the system will elastically seek to return to an unstressed or relaxed state, and thus release energy that is stored. This results in the linear movement of one or other of the reservoirs which can be used as a linear motion mechanism of significant utility adaptable for a variety of fields, from medical applications and devices to time keeping devices.

In one embodiment, at least two immiscible fluids may be used, which then allows the system to indicate its energy state. The device may be used as an alternative stored energy source for a wristwatch, replacing the traditional main spring.

An object of the invention is to provide a novel alternative to a traditional watch mainspring.

Another object of the invention is to provide an aesthetically and intellectually attractive energy storage and release device.

In an advantage, the use of two reservoirs allows the sizing of each reservoir to enable an adaption of the displacement in the first reservoir that results in a desired rate of displacement of the second reservoir and a multiplication of the force, which may be used to select a more convenient or suitable gearing system, or to produce another desired effect.

In a variant, the invention provides a time keeping device including two reservoirs. The two reservoirs have an elasticity; the two reservoirs are in fluid communication with each other; and the two reservoirs are filled with at least one fluid to store and release energy.

In yet other variants, the time keeping device is filled with a liquid, or optionally, filled with at least two different liquids.

In yet another variant, the reservoirs are not the same size, and the device includes a channel, and in which a portion of the channel connecting the reservoirs is transparent and visible.

In another embodiment, the time keeping device further includes a meniscus, and the meniscus is disposed between the two fluids to indicate an energy state of the time keeping device.

In yet a further embodiment, the time keeping device further includes at least two menisci, and wherein the at least two menisci are located between at least three different immiscible fluids, and the menisci indicate the energy state of the time keeping device.

In yet another variant, the time keeping device, at the point of the meniscus, includes a solid indicator and, optionally, the solid indicator is of a bright color to enhance visibility.

These and other objects of the invention are described in the drawings, detailed description of the invention, and claims related thereto.

### Brief Description of the Drawings

**FIG. 1A** is a schematic side view of the energy storage and release device of the invention.
**FIG. 1B** is a schematic top view of the energy storage and release device of the invention.
**FIG. 2** is a partial schematic side view of an alternate embodiment in which at least three fluids indicating two menisci are used.
**FIG. 3** is a perspective view of a time keeping device that uses the system of the invention.

Those skilled in the art will appreciate that elements in the figures are illustrated for simplicity and clarity and have not necessarily been drawn to scale. For example, dimensions may be exaggerated relative to other elements to help improve understanding of the invention and its embodiments. Furthermore, when the terms 'first', 'second', and the like are used herein, their use is intended for distinguishing between similar elements and not necessarily for describing a sequential or chronological order. Moreover, relative terms like 'front', 'back', 'top' and 'bottom', and the like in the description and/or in the claims are not necessarily used for describing exclusive relative position. Those skilled in the art will therefore understand that such terms may be interchangeable with other terms, and that the embodiments described herein are capable of operating in other orientations than those explicitly illustrated or otherwise described.

### Detailed Description of the Preferred Embodiment

The following description is not intended to limit the scope of the invention in any way as they are exemplary in nature and serve to describe the best mode of the invention known to the inventor(s) as of the filing date hereof. Consequently, changes may be made in the arrangement and/or function of any of the elements described in the disclosed exemplary embodiments without departing from the spirit and scope of the invention.

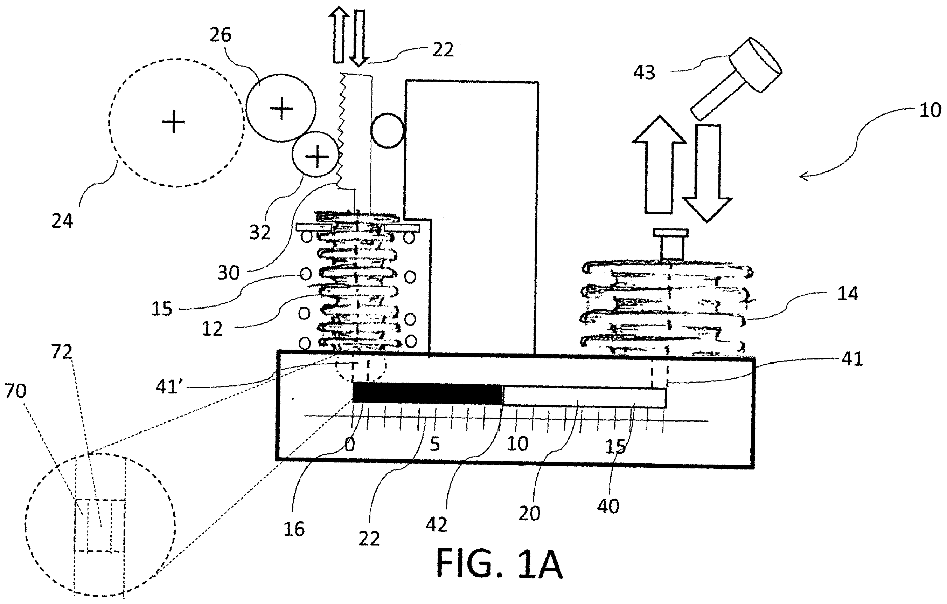

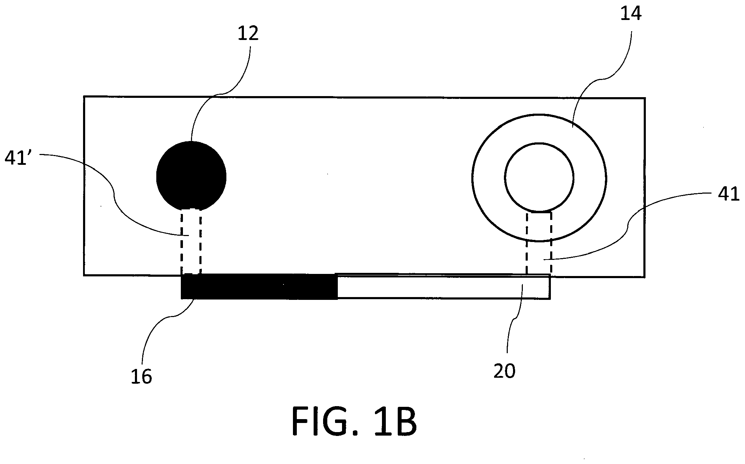

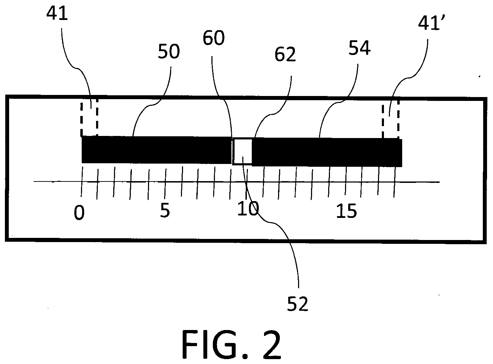

Referring now to **FIGs. 1A** and **1B**, an energy storage and release system 10 includes two elastic bellows 12, 14 in fluid communication with one another and filled with a fluid or fluids 16, 20 (such fluids may be liquids alone or comprise a fluid gas, which in this case may be represented in the drawing as fluid 20) thus allowing mechanical power transmission. The associated elasticity of the reservoir 12, 14 may be characteristic of the form of the reservoir or imparted by a supplemental spring 15.The energy which loads the system 10 comes from externally winding up the system with a winding/unwinding system 43 (which can be performed either manually or automatically). The winding or loading force 22 is transmitted by a mechanism 24 attached to one or the other fluid reservoirs (in this case reservoir 12), typically through a gearing 26. The gearing 26 may include a rack 30 and pinion 32 arrangement. As the system 10 is loaded, the fluid 16 or 20 (or 50 or 54 in the embodiment of FIG. 2) contained therein (if a liquid being at least partially incompressible) causes the fluid reservoirs 12, 14 to expand and/or contract, as the case may be. Unlike the typical liquid, the fluid reservoirs 12, 14 are elastic and so, once a reservoir is filled or contracted, then when the energy input from the mentioned manual or automatic winding 24 is removed, the system 10 will elastically seek to return to an unstressed or relaxed state, and thus release energy that is stored, much like a spring. This results in the essentially linear movement of one or the other (and typically both) of the reservoirs 12, 14, thus allowing the system to be used as a linear motion mechanism of significant utility adaptable for a variety of fields, from medical to time keeping.

In one embodiment, the bellows 12, 14 are made of brass. In another embodiment, the bellows 12, 14 are made of copper. In another embodiment, the bellows 12, 14 are made of beryllium copper. The bellows 12, 14 may optionally be coated with a brilliant coating such as gold. It should be appreciated that the particular implementations shown and herein described are representative of the invention and its best mode and are not intended to limit the scope of the present invention in any way. It should be appreciated that many applications of the present invention may be formulated.

In one embodiment, at least two immiscible fluids 16, 20, of contrasting colors (e.g., red, blue or black and white or transparent), are used. In this case, the volume of each fluid and size of the capillary 41, 41' as well as the elastic fluid reservoir, enables the selection of the range of positions of the meniscus 42 therebetween, such being juxtaposed to a scale 22 which then allows the system 10 to indicate its energy state. Typically, at least one of the fluids 16, 20 is a liquid. The device 10 may be used as an alternative stored energy source for a wristwatch, replacing the traditional main spring.

In one embodiment, a portion of a channel 40 connecting the reservoirs 12, 14 is transparent, translucent, and visible to a user, being juxtaposed next to the scale 22. In this embodiment, a meniscus 42 between two fluids contained in the system 10 indicates the energy state due to its juxtaposition to the scale 22, and thus the energy stored in the system 10. The system 10 may be actuated by a watchmaker winding system 24 (such as an automatic winding mechanism having a mass which rotates with motion of the wearer), instead of the traditional watch mainspring.

The system 10 may be optionally actuated a traditional watch movement (with a display using an hour and minute hand) or a watch movement, which actuates a fluid display system. In another embodiment, displacement invoked by the system 10 is corrected to account for thermal expansion of the fluids used therein, such as with the thermally compensated bellows (compensated capillary indicator) in the patent references herein incorporated by reference.

Referring now to **FIG. 2****,** it is shown how three fluids 50, 52, 54 and may be arranged, typically such that the middle fluid 52 is of a different and highly visible color (such as a florecent color) so as to produce two mensicii 60, 62, in order to provide a point-like indicator. A similar effect however can be achieved by using two fluids 16, 20, wherein, at the interface, a solid ball (not shown but at the same location as fluid 52 of FIG. 2) is disposed.

The use of two reservoirs 12, 14 as described herein allows the sizing of each reservoir to enable an adaption of the displacement in the first reservoir 12 so as to result in a desired rate of displacement of the second reservoir 14, which may be used to select a more conventional gearing system, or to produce another desired effect. The use of two bellows 12, 14 allows the placement of the indicator channel 40 therebetween to indicate the energy state of the system. Other embodiments are shown and described in appendices attached to the priority filings, which is incorporated herein in this written description by reference thereto.Variants A-B are also used, in combination, with the invention described herein. In the instant invention, the bellows 12 is driven by, for example, a rack and pinion gear system 30, 32 preferably driven by a known electrical or mechanical watch movement 24. Of course, in place of the rack and pinion system 30, 32, a screw or other suitable drive may be used.

### Example of Variant A

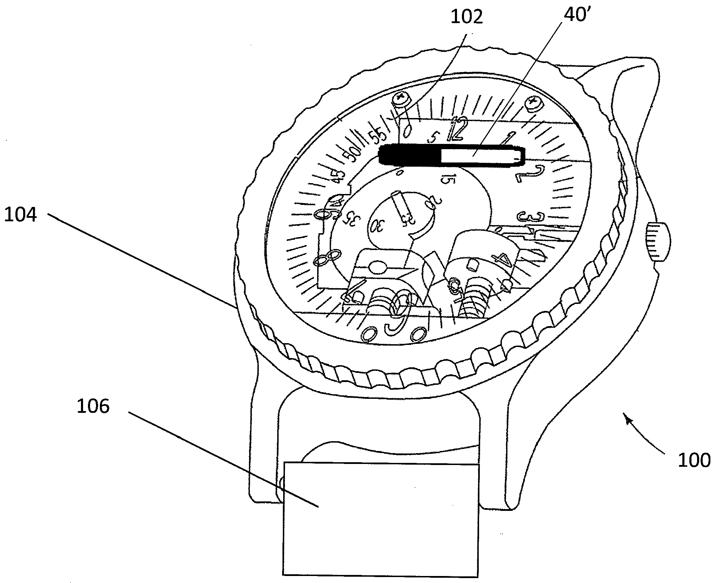

Referring to **FIG. 3****,** in Variant A, the invention is embodied in a wristwatch 100. The wristwatch includes a bezel, a crystal 102, an at least partially transparent dial, a watch mechanism which includes a fluid displacement device, a capillary manifold, a watch movement subassembly, a case body 104 and a strap 106. In a known manner, the bezel encapsulates the crystal against the watch mechanism against the case body, sealing the watch mechanism within an exterior housing against the elements (rain, water, snow, etc). Note that the lower part of the casing can also be transparent, to expose the inner workings of the watch to the user. A bracelet pin is provided, to attach a bracelet (not shown). The power source may be movement from an oscillating mass, which winds a watch spring, which powers a gear train, for which the rate of rotation is controlled by a pendulum-like regulator or oscillating disk (e.g., a balancier/turbion), which has a characteristic period, as known in the art.

Optionally, an optical fiber and an LED light source illuminate the fluid in the reservoir in a known manner.

### Example of Variant B

In this Variant, a means of limiting fluid flow or restricting it to a controlled flow is provided so that the fluids do not mix when a meniscus between the fluids is moved. This variant includes at least one fluid restrictor 70, and a capillary channel or tube 40'. The fluid restrictor 70 has a small aperture 72 formed therethrough. The capillary tube 40' is adapted to receive at least two immiscible fluids. The fluid restrictor 70 is sealingly affixed in the capillary tube 40' so that the small aperture 72 communicates between portions of the capillary tube 40'. The capillary tube 40' is optionally treated so that an inner surface is oilophobic and hydrophobic. A fluid is forced through the fluid restrictor 70 into the capillary tube 40' to move the meniscus 42, 60, 62 formed between the fluids contained therein. An object of this embodiment of the invention is better control of the interface or meniscus 42, 60, 62 between the at least two fluids contained in the capillary tube 40', preventing mixing.

The fluid restrictors 70, combined with coating of the capillary tube 40' provide significant advantages when used in the energy storage system 10 of the invention. The restrictor 70 prevents excessively rapid movement of the meniscus 42, 60, 62 between the fluids 16, 20 or 50, 52, 54 within the tube 40'.

The fluid restrictor 70 is preferrably a ceramic or stone but may also be a metal. The fluid restrictor 70 is formed as a cylindrically shaped element. A tiny hole (a few microns in diameter) in the fluid restrictor is preferably located along the axis of the fluid restrictor. The function of the fluid restrictor is the stability of the meniscus, and the protection of the system.

The hole or aperture 72 in the fluid restrictor 70 has a width of between 0.03and 0.1 mm in diameter. The aperture of the capillary tube has a width of between 0.6 and 1 mm, preferably 1 mm in diameter. Preferably, the ratio between the widths of the hole 72 of the fluid restrictor 70 and that of the capillary tube 40' is 1:5 to 1:15, for fluids having viscocities between 0.3 et 80 cP at room temperature, sea level, and preferably 0.3 a 5 cP.

The capillary tube 40' and the fluid restrictor 70 need not have circular inner apertures 72. In fact, such may be square, triangular, or irregular apertures. These may also be adapted to such a non-circular channel formed in the plate.

The hole or aperture 72 of the fluid restrictor 70 is formed such that the exit port of the aperture which exits into the capillary tube 40' enters the capillary tube at an angle to the central axis of the fluid restrictor. This reduces the chances that the incoming stream of fluid will disrupt the meniscus 42, 60, 62, particularly when the meniscus is near the fluid restrictor, by diverting the flow away from the center of the meniscus to the sides. Still further, several such holes connecting to a single central hole of the fluid restrictor 70 may further help diver the incoming fluid flow away from a center of the meniscus.

Any number of glues may be used to affix the fluid restrictor to the capillary tube. Two have proven to be particularly effective. "VITRALIT"® 1605 from Panacol AG of Steinbach, Germany, diluted with a thinner, is one and has the following characteristics: "VITRALIT"® is thermally cured (30 min @ 105°C) and/or UV cured (s ^{@} UV-A 60mW/cm2, thickness step: 0.5 mm). Further, it is a one component epoxy and has a viscosity in the range of - cPs (@25°C). As for "EPO-TEK"® 301, available from Epoxy Technology, Inc of Billerica, MA is thermally cured (1 hr @ 65°C), is two component (20:5), and has a viscosity in the range of 100 - 200 cPs (@23°C), which is significantly lower than "VITRALIT"®.

In an advantage of the invention, a conventional watch spring can be done away with.

In another advantage, the energy state of the system 10 can be readily visually perceived.

In another advantage, the system 10 functions without a battery.

Other characteristics and modes of execution of the invention are described in the appended claims.

As used herein, the terms "comprises", "comprising", or any variation thereof, are intended to refer to a non-exclusive listing of elements, such that any process, method, article, composition or apparatus of the invention that comprises a list of elements does not include only those elements recited, but may also include other elements described in this specification. The use of the term "consisting" or "consisting of" or "consisting essentially of" is not intended to limit the scope of the invention to the enumerated elements named thereafter, unless otherwise indicated. Other combinations and/or modifications of the above-described elements, materials or structures used in the practice of the present invention may be varied or otherwise adapted by the skilled artisan to other design without departing from the general principles of the invention.

Further, the invention should be considered as comprising all possible combinations of every feature described in the instant specification, appended claims, and/or drawing figures which may be considered new, inventive and industrially applicable.

Multiple variations and modifications are possible in the embodiments of the invention described here. Although certain illustrative embodiments of the invention have been shown and described here, a wide range of modifications, changes, and substitutions is contemplated in the foregoing disclosure. For example, such indicators can be used as speed or RPM indicators in vehicles. Further, such indicators can be used to indicate body temperature or other parameters, like heart rate in sports, or in indicators used in medical devices or diagnostic equipment. While the above description contains many specifics, these should not be construed as limitations on the scope of the invention, but rather as exemplifications of one or another preferred embodiment thereof. In some instances, some features of the present invention may be employed without a corresponding use of the other features. In addition, the term "flexible" as used herein encompasses the concept of variable, in that a variable volume reservoir should be considered a flexible chamber, even if no individual components flex. Accordingly, it is appropriate that the foregoing description be construed broadly and understood as being given by way of illustration and example only, the scope of the invention being limited only by the claims which ultimately issue in this application.

It should be appreciated that the particular implementations shown and described herein are representative of the invention and its best mode and are not intended to limit the scope of the present invention in any way. Furthermore, the connecting lines shown in the various figures contained herein are intended to represent exemplary functional relationships and/or physical couplings between various elements. It should be noted that many alternative or additional functional relationships or physical connections may be present in a practical system.

Moreover, the system contemplates the use, sale and/or distribution of any goods, services or information having similar functionality described herein.

The specification and figures are to be considered in an illustrative manner, rather than a restrictive one and all modifications described herein are intended to be included within the scope of the invention claimed, even if such is not specifically claimed at the filing of the application. Accordingly, the scope of the invention should be determined by the claims appended hereto rather than by merely the examples described above. For instance, steps recited in any method or process claims may be executed in any order and are not limited to the specific order presented in any claim. Further, the elements and/or components recited in any apparatus claims may be assembled or otherwise operationally configured in a variety of permutations to produce substantially the same result as the present invention.

## Claims

1. A time keeping device comprising: at least two reservoirs in essentially a closed loop, in which the system uses a respective elasticity associated with at least one of the said reservoirs together with a fluid capacitance of the reservoirs, to store and release energy, the at least two of the reservoirs being in fluid communication with each other, the two reservoirs being filled with at least one essentially incompressible fluid, in which the reservoirs are accordion style reservoirs.

2. The time keeping device of claim 1, wherein the two reservoirs have differing fluid capacitances.

3. The time keeping device of claim 1, further comprising a channel connected the at least two reservoirs, and in which a portion of the channel connecting the two reservoirs is transparent and visible to a user.

4. The time keeping device of claim 1, filled with at least two immiscible liquids, further comprising a meniscus, and in which the time keeping device uses the meniscus disposed between the two fluids to indicate an energy state of the time keeping device.

5. The time keeping device of claim 1, filled with at least two immiscible liquids, further comprising at least three fluids and two menisci, and wherein the at least two menisci are disposed between the at least three fluids to indicate the energy state of the time keeping device.

6. The time keeping device of claim 3, further comprising a meniscus which is visible in the channel, and wherein at a point of the meniscus, a solid indicator is disposed, the solid indicator being optionally of a bright color to enhance visibility.

7. A method of energizing a portion of a time keeping device, the method comprising: placing two reservoirs in fluid communication with each other via a connecting channel, the reservoirs being filled with at least one substantially incompressible fluid; and, using an elasticity associated with at least one reservoir to activate the at least one fluid to actuate elements of the time keeping device so as to store and release energy.

## Patentansprüche

1. Zeitmessgerät, das umfasst: zumindest zwei Reservoirs in im Wesentlichen einer geschlossenen Schleife, wobei das System eine jeweilige Elastizität, die mit zumindest einem der Reservoirs assoziiert ist, gemeinsam mit einem Fluidaufnahmevermögen der Reservoirs nutzt, um Energie zu speichern und freizusetzen, wobei die zumindest zwei der Reservoirs miteinander in Fluidverbindung stehen, wobei die zwei Reservoirs mit zumindest einem im Wesentlichen nichtkomprimierbaren Fluid gefüllt sind, wobei die Reservoirs Reservoirs vom Ziehharmonikatyp sind.

2. Zeitmessgerät nach Anspruch 1, wobei die zwei Reservoirs unterschiedliche Fluidaufnahmevermögen aufweisen.

3. Zeitmessgerät nach Anspruch 1, das ferner einen Kanal umfasst, der mit den zumindest zwei Reservoirs verbunden ist, und wobei ein Abschnitt des Kanals, der die zwei Reservoirs verbindet, transparent und für einen Benutzer sichtbar ist.

4. Zeitmessgerät nach Anspruch 1, das mit zumindest zwei nichtvermischbaren Flüssigkeiten gefüllt ist, das ferner einen Meniskus umfasst, und wobei das Zeitmessgerät den zwischen den zwei Fluiden angeordneten Meniskus verwendet, um einen Energiestatus des Zeitmessgeräts anzuzeigen.

5. Zeitmessgerät nach Anspruch 1, das mit zumindest zwei nichtvermischbaren Flüssigkeiten gefüllt ist, das ferner zumindest drei Fluide und zwei Menisken umfasst, und wobei die zumindest zwei Menisken zwischen den zumindest drei Fluiden angeordnet sind, um den Energiestatus des Zeitmessgeräts anzuzeigen.

6. Zeitmessgerät nach Anspruch 3, das ferner einen Meniskus umfasst, der im Kanal sichtbar ist, und wobei an einer Stelle des Meniskus ein fester Indikator angeordnet ist, wobei der feste Indikator optional eine helle Farbe aufweist, um die Sichtbarkeit zu verbessern.

7. Verfahren zur Energieversorgung eines Abschnitts eines Zeitmessgeräts, wobei das Verfahren umfasst: Platzieren von zwei Reservoirs in Fluidverbindung miteinander über einen Verbindungskanal, wobei die Reservoirs mit zumindest einem im Wesentlichen nichtkomprimierbaren Fluid gefüllt sind; und Nutzen einer Elastizität, die mit zumindest einem Reservoir assoziiert ist, um das zumindest eine Fluid zu aktivieren, so dass Elemente des Zeitmessgeräts betätigt werden, um Energie zu speichern und freizusetzen.

## Revendications

1. - Dispositif horaire comprenant : au moins deux réservoirs essentiellement en boucle fermée, le système utilisant une élasticité respective associée à au moins un desdits réservoirs conjointement avec une capacitance fluide des réservoirs, pour stocker et libérer de l'énergie, les au moins deux réservoirs étant en communication fluidique l'un avec l'autre, les deux réservoirs étant remplis d'au moins un fluide essentiellement incompressible, les réservoirs étant des réservoirs du style en accordéon.

2. - Dispositif horaire selon la revendication 1, dans lequel les deux réservoirs ont des capacitances fluides différentes.

3. - Dispositif horaire selon la revendication 1, comprenant en outre un canal reliant les au moins deux réservoirs, et une partie du canal reliant les deux réservoirs étant transparente et visible pour un utilisateur.

4. - Dispositif horaire selon la revendication 1, rempli d'au moins deux liquides non miscibles, comprenant en outre un ménisque, et le dispositif horaire utilisant le ménisque disposé entre les deux fluides pour indiquer un état d'énergie du dispositif horaire.

5. - Dispositif horaire selon la revendication 1, rempli d'au moins deux liquides non miscibles, comprenant en outre au moins trois fluides et deux ménisques, et les au moins deux ménisques étant disposés entre les au moins trois fluides pour indiquer l'état d'énergie du dispositif horaire.

6. - Dispositif horaire selon la revendication 3, comprenant en outre un ménisque qui est visible dans le canal, et un indicateur plein étant disposé au niveau d'un point du ménisque, l'indicateur plein étant facultativement d'une couleur vive pour améliorer la visibilité.

7. - Procédé pour alimenter en énergie une partie d'un dispositif horaire, le procédé comprenant : placer deux réservoirs en communication fluidique l'un avec l'autre par l'intermédiaire d'un canal de liaison, les réservoirs étant remplis d'au moins un fluide sensiblement incompressible ; et utiliser une élasticité associée à au moins un réservoir pour activer le au moins un fluide pour actionner des éléments du dispositif horaire de façon à stocker et libérer de l'énergie.
